# FASCICULE DE BREVET EUROPEEN

(11) **EP 3 208 197 B1**
(45) Date de publication et mention de la délivrance du brevet: **08.04.2020**
(21) Numéro de dépôt: 17154852.2
(22) Date de dépôt: 06.02.2017
(51) Int. Cl.: B64D 37/32

(54) **GÉNÉRATEUR DE GAZ D'INERTAGE, ET SYSTÈME D'INERTAGE D'UN RÉSERVOIR DE CARBURANT D'UN AÉRONEF METTANT EN OEUVRE LEDIT GÉNÉRATEUR DE GAZ D'INERTAGE**
INERTGASGENERATOR UND SYSTEM ZUR INERTIERUNG EINES KRAFTSTOFFTANKS EINES LUFTFAHRZEUGS, BEI DEM DIESER INERTGASGENERATOR ZUM EINSATZ KOMMT
INERT GAS GENERATOR, AND SYSTEM FOR INERTING A FUEL TANK OF AN AIRCRAFT IMPLEMENTING SAID INERT GAS GENERATOR

(30) Priorité: 18.02.2016 FR 1651294
(43) Date de publication de la demande: 23.08.2017
(73) Titulaire: Zodiac Aerotechnics, 42230 Roche La Moliere (FR)
(72) Inventeur: CLARIS, Christophe, 42170 SAINT-JUST-SAINT-RAMBERT (FR)
(74) Mandataire: Cabinet Laurent & Charras

(56) Documents cités:
- EP-A1- 1 253 077
- US-A- 4 681 602
- US-A1- 2005 115 404
- US-A1- 2008 168 798

## Description

### DOMAINE TECHNIQUE

La présente invention se rapporte au domaine technique des générateurs de gaz d'inertage, notamment utilisés dans des systèmes d'inertage d'au moins un réservoir de carburant d'un aéronef, tel qu'un avion, un hélicoptère ou analogue.

### ART ANTERIEUR

Dans le domaine de l'aéronautique, comme divulgué dans les demandes de brevet US 2008/168798 A1 et US 2005/115404 A1, il est bien connu d'utiliser des systèmes d'inertage pour générer un gaz d'inertage, tel que de l'azote, ou tout autre gaz neutre tel que le dioxyde de carbone par exemple, et pour introduire ledit gaz d'inertage dans les réservoirs de carburant pour des raisons de sécurité afin de réduire le risque d'explosion desdits réservoirs.

Un système classique d'inertage de l'art antérieur comporte, d'une manière générale, un générateur de gaz d'inertage embarqué dit OBIGGS, selon l'acronyme anglo-saxon « On Board Inert Gas Generation Systems », alimenté en air, par exemple avec de l'air de purge détourné d'au moins un moteur. En effet, l'air de purge détourné d'au moins un moteur est actuellement le modèle le plus largement utilisé. Dans un tel système, la purge d'air est généralement déviée d'un ou plusieurs moteurs à partir de l'ouverture dite de pression intermédiaire et/ou de l'ouverture dite de haute pression en fonction de la situation de vol. On notera que l'utilisation de purge d'air pour le conditionnement d'air est avantageuse car la purge d'air a une pression relativement élevée, ainsi qu'une température relativement élevée, de sorte que l'air peut être ajusté sur une large gamme de pressions et de températures désirées. Le système OBIGGS est couplé au réservoir de carburant de l'avion et sépare l'oxygène de l'air.

Le système OBIGGS comprend généralement un module de séparation d'air, ou plusieurs modules agencés en parallèles, contenant, par exemple, des membranes de zéolithe au travers desquelles un flux d'air est pressé. En raison des différents taux de transfert de masse de l'azote et de l'oxygène, le système divise le flux d'air de telle sorte qu'un flux d'air à forte teneur en azote et un flux d'air à forte teneur en oxygène sont obtenus. La fraction d'air enrichi en azote, considéré comme le gaz d'inertage, est acheminée dans les réservoirs de carburant de telle sorte que le mélange d'air et de vapeur de kérosène présent dans cet emplacement est déplacé et évacué hors des réservoirs. La fraction de l'air enrichi en oxygène peut être réintroduite dans la cabine des passagers après avoir été traitée avec des moyens appropriés et/ou dans la chambre de combustion des réacteurs afin d'améliorer la combustion. Les dispositifs nécessaires à cette opération tels que des compresseurs, des filtres, des modules de refroidissement à air, des eaux et analogues sont intégrés dans l'installation de gaz d'inertage.

Ainsi, lorsque le ratio entre le carburant et l'oxygène, dans la partie vide du réservoir est inférieur à la limite d'inflammation définie conformément aux exigences de la FAA selon l'acronyme anglo-saxon « Federal Aviation Administration » détaillées dans le document AC25.981-2A en date du 19 septembre 2008 et intitulé « FUEL TANK FLAMMABILITY REDUCTION MEANS » et ses annexes, aucune inflammation spontanée ne peut avoir lieu. De ce qui précède, rendre inerte un réservoir de carburant consiste notamment, par l'injection du gaz d'inertage, à maintenir le taux d'oxygène présent dans ledit réservoir sous un certain seuil, par exemple 12%.

Les générateurs de gaz d'inertage de l'état de la technique comprennent au moins deux modules de séparation d'air, montés en parallèles, afin de générer et délivrer un gaz enrichi en azote avec une pureté, à savoir une concentration d'oxygène résiduelle et un débit souhaités.

Le système d'inertage comprend de préférence une vanne de contrôle de débit installée en aval des modules de séparation d'air, afin de moduler le type de débit envoyé aux réservoirs selon la phase de vol de l'aéronef.

Une modulation à bas débit, par exemple de 0,45 à 0,90 kg/min, permet de générer un gaz d'inertage de très bonne qualité, comprenant notamment de l'ordre de 3% d'oxygène. Ce mode bas débit est généralement utilisé en phases stabilisées de l'aéronef, par exemple au sol ou en phase de croisière, pour lesquelles les besoins en débit de gaz d'inertage sont relativement faibles.

En mode descente, le système d'inertage tend à utiliser un mode haut débit, par exemple de 0,68 à 1,36 kg/min, pour lequel le débit de gaz d'inertage envoyé dans les réservoirs est élevé mais dont la qualité et la pureté sont moins bonnes, notamment de l'ordre de 13% d'oxygène.

Le principal inconvénient du générateur de gaz d'inertage de l'état de la technique réside dans son dimensionnement. En effet, l'agencement des modules de séparation d'air entraine un surdimensionnement du générateur, notamment par exemple en nombre de modules et d'éléments de filtration, par rapport au besoin réel, en fonction de la phase de vol, et entraine donc une surconsommation en kérosène ainsi qu'un alourdissement de l'aéronef.

### EXPOSE DE L'INVENTION

L'un des buts de l'invention est donc de remédier à ces inconvénients en proposant un générateur de gaz d'inertage qui permet de fournir un gaz d'inertage de bonne qualité, notamment en terme de pureté et de faible teneur en oxygène.

Un autre objectif de l'invention est de fournir un générateur de gaz d'inertage adaptable en fonction du besoin et de la phase de vol de l'aéronef.

A cet effet et selon l'invention, il a été mis au point un générateur de gaz d'inertage selon la revendication 1.

Les modules de séparation d'air sont agencés en série de sorte qu'ils permettent de générer un gaz d'inertage d'une très grande pureté c'est-à-dire avec une très faible teneur en oxygène, notamment de l'ordre de 3%. De plus, des modules de séparation de plus petites dimensions peuvent être mis en œuvre pour atteindre des performances similaires à celles d'un système avec des modules de séparation plus importants et agencés en parallèle. L'intégration du générateur de gaz d'inertage dans le système d'inertage d'un aéronef est alors facilitée.

Il est possible de faire passer les modules de séparation d'air d'un agencement en série à un agencement en parallèle pour s'adapter à la phase de vol et aux besoins réels en quantité et en qualité de gaz d'inertage.

En effet, la présente invention permet de réaliser une modulation du débit de gaz d'inertage, de manière alternative par rapport à la modulation haut débit/bas débit couramment utilisée, au moyen d'un mode d'utilisation des modules de séparation d'air en série ou en parallèle.

Ainsi, la présente invention permet, d'une part, de dimensionner les équipements de filtration à la baisse, tels que par exemple le convertisseur d'ozone et le filtre à particules et, d'autre part, d'utiliser les modules de séparation d'air à débit relativement constant ce qui présente notamment des avantages vis-à-vis de la régulation thermique du système. En effet, le système de préparation d'air du système d'inertage peut aussi être dimensionné à la baisse.

L'invention trouve un intérêt particulier dans les systèmes d'inertage de dimensions importantes comprenant plus de deux modules de séparation d'air.

Selon une forme de réalisation particulière, les vannes utilisées peuvent être du type à régulation de débit ou de pression.

Les modules de séparation d'air peuvent être de tout type. De préférence, les premier et deuxième modules de séparation d'air comprennent des membranes de zéolithe, pouvant comprendre des tailles différentes d'un module à l'autre.

L'invention concerne également un aéronef selon la revendication 6.

Ainsi, lorsque les réservoirs de l'aéronef nécessitent un débit important de gaz d'inertage, particulièrement en phase de descente de l'aéronef, l'invention permet de faire passer les modules de séparation d'air en série afin que le gaz d'inertage présente une meilleure qualité.

En revanche, lorsque les réservoirs nécessitent un faible débit de gaz d'inertage, le gaz d'inertage à faible débit présente donc déjà une bonne qualité de sorte que les modules de séparation d'air peuvent être utilisés en série ou en parallèle selon les besoins.

### DESCRIPTION SOMMAIRE DES FIGURES

D'autres avantages et caractéristiques ressortiront mieux de la description qui va suivre, donnée à titre d'exemple non limitatif, du générateur de gaz d'inertage selon l'invention, à partir des dessins annexés dans lesquels :
- la figure 1 est une représentation schématique d'un générateur de gaz d'inertage selon l'invention ;
- la figure 2 est une représentation schématique illustrant un système d'inertage selon l'invention ;
- la figure 3 est une représentation schématique similaire à celle de la figure 1 illustrant l'agencement en série des modules de séparation d'air ;
- la figure 4 est une représentation schématique similaire à celle de la figure 1 illustrant l'agencement en parallèle des modules de séparation d'air.

### DESCRIPTION DETAILLEE DE L'INVENTION

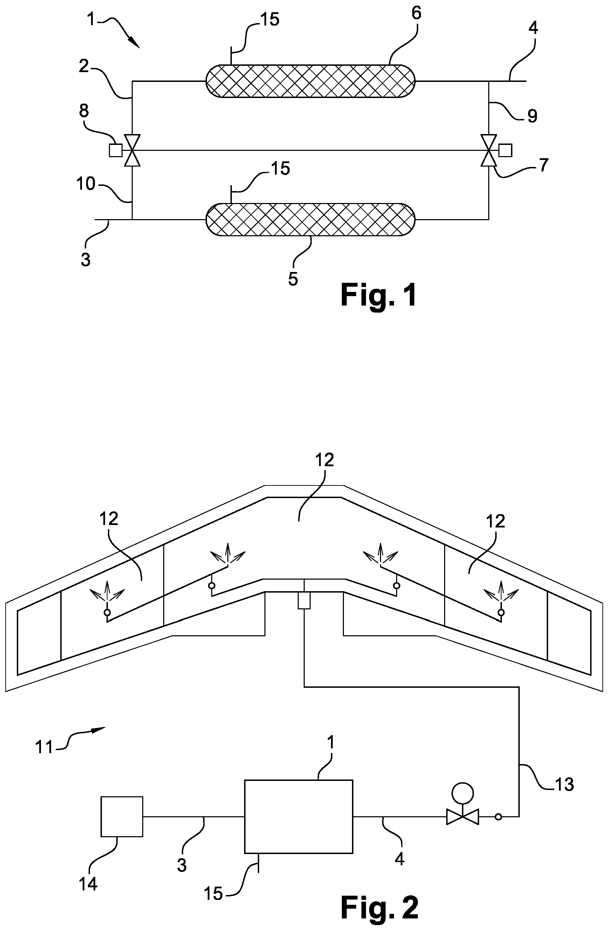

En référence à la figure 1, l'invention concerne un générateur (1) de gaz d'inertage comprenant un circuit (2) d'air à appauvrir en oxygène pour générer du gaz d'inertage enrichi en azote.

En référence à la figure 2, le générateur (1) est notamment destiné à être mis en œuvre dans un système d'inertage (11) d'au moins un réservoir (12) de carburant d'un aéronef. A cet effet, le générateur (1) de gaz d'inertage comprend une entrée d'air (3) alimentée avec de l'air de purge détourné d'au moins un moteur et/ou de l'air d'une cabine de passagers et/ou de l'air extérieur à l'aéronef par l'intermédiaire d'un système de préparation d'air (14) assujetti à un compresseur, et une sortie de gaz d'inertage (4) connectée avec des moyens de distribution (13) du gaz d'inertage dans le ou les réservoirs (12) de carburant. Le générateur (1) comprend également une sortie de gaz enrichi en oxygène(15)

Le système d'inertage (11) permet de générer et d'introduire un gaz d'inertage dans le ou lesdits réservoirs (12) de carburant de l'aéronef pour des raisons de sécurité afin de réduire le risque d'explosion desdits réservoirs. Le gaz d'inertage injecté vise à rendre inerte le ou les réservoirs (12) de carburant, c'est-à-dire qu'il permet de réduire le taux d'oxygène présent dans le ou lesdits réservoirs, et notamment de maintenir ce taux sous un certain seuil, de préférence inférieur à 12%.

En référence à la figure 1, le générateur (1) de gaz d'inertage comprend au moins deux modules (5, 6) de séparation d'air, comprenant par exemple des membranes de zéolithe au travers desquelles l'air est pressé de manière à obtenir, d'une part, un gaz d'inertage à forte teneur en azote et, d'autre part, un gaz à forte teneur en oxygène.

Selon l'invention, le circuit d'air (2) du générateur (1) de gaz d'inertage permet de relier les deux modules (5, 6) de séparation d'air, et comprend des agencements pour sélectivement dévier, en amont du premier module (5), une partie du flux d'air directement vers l'entrée du deuxième module (6), et des agencement pour sélectivement dévier, en aval du premier module (5), l'intégralité du flux d'air directement vers la sortie de gaz d'inertage (4).

A cet effet, le circuit d'air (2) comprend deux vannes (7, 8) agencées entre les premier et deuxième modules (5, 6) de séparation d'air. Une première vanne (7) est connectée directement à la sortie de gaz (4) par l'intermédiaire d'un premier circuit de dérivation (9), et une deuxième vanne (8) est connectée au circuit d'air (2) en amont du premier module (5) de séparation d'air par l'intermédiaire d'un deuxième circuit de dérivation (10).

Ainsi, l'invention permet de faire passer les modules (5, 6) de séparation d'air d'un agencement en série à un agencement en parallèle.

En effet, lorsque les réservoir de carburant de l'aéronef nécessitent un débit important de gaz d'inertage, notamment en phase non stabilisée de l'aéronef, telle qu'en phase de descente par exemple, les modules (5, 6) de séparation d'air sont passés dans un agencement en série par l'actionnement des vannes (7, 8) pour obtenir un fort débit de gaz d'inertage tout en assurant une bonne qualité dudit gaz d'inertage, avec une teneur faible en oxygène de l'ordre de 3%.

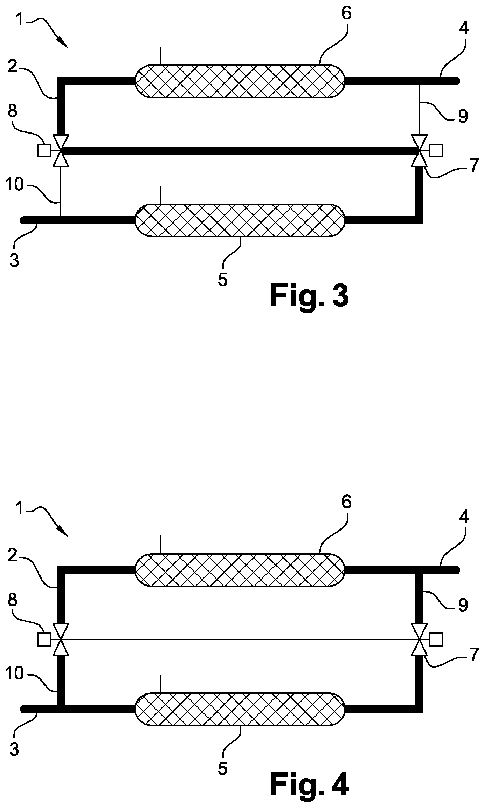

A cet effet, et en référence à la figure 3, les vannes (7, 8) sont basculées dans une position de mise en série dans laquelle, le flux d'air circulant dans le circuit d'air (2) traverse le premier module (5) de séparation d'air, passe par les première et deuxième vannes (7, 8), traverse le deuxième module (6) de séparation d'air, et est évacué par la sortie de gaz d'inertage (4) pour la distribution et l'injection dans les réservoirs.

L'agencement en série des modules (5, 6) de séparation d'air peut également être envisagé en phase de croisière de l'aéronef pour permettre d'optimiser le dimensionnement des éléments de filtration du générateur (1) de gaz d'inertage.

D'une manière alternative, lorsque les réservoirs nécessitent un débit faible en gaz d'inertage et en fonction du besoin ou de la phase de vol, les modules (5, 6) de séparation d'air sont passés dans un agencement en parallèle par l'actionnement des deux vannes (7, 8),

A cet effet, et en référence à la figure 4, les vannes (7, 8) sont basculées dans une position de mise en parallèle dans laquelle à partir de l'entrée d'air (3) :
- une première partie du flux d'air circulant dans le circuit d'air (2) traverse le premier module (5) de séparation d'air jusqu'à la première vanne (7) qui dévie ensuite la première partie du flux d'air dans le premier circuit de dérivation (9) et directement vers la sortie de gaz d'inertage (4) sans passer par le deuxième module (6) de séparation ;
- une deuxième partie du flux d'air est déviée par l'intermédiaire de la deuxième vanne (8) dans le deuxième circuit de dérivation (10) et directement vers l'entrée du deuxième module (6) de séparation, sans passer par le premier module (5) de séparation, et traverse ledit deuxième module (6) jusqu'à la sortie de gaz d'inertage (4).

Selon l'invention, des gaz d'inertage avec des puretés similaires peuvent être obtenus avec des débits différents en fonction de l'agencement en série ou en parallèle des modules (5, 6) de séparation d'air. Ceci est particulièrement avantageux lorsque l'on souhaite générer un gaz d'inertage avec une qualité et une pureté constantes, et avec des débits différents.

L'invention est particulièrement avantageuse lorsque les vannes (7, 8) utilisées sont du type à régulation de pression ou à régulation de débit.

Bien entendu, sans sortir du cadre de l'invention, des variantes peuvent être envisagées avec un générateur (1) comprenant plus de deux modules (5, 6) de séparation d'air afin de générer un gaz d'inertage comprenant une pureté répondant aux besoins, notamment dans le cadre d'applications avec régulation en boucle fermée par exemple. L'essentiel de l'invention réside, d'une part, dans le fait de fournir un générateur (1) de gaz d'inertage avec des modules (5, 6) de séparation d'air agencés en série, et d'autre part, dans le fait de pouvoir avantageusement faire passer, en fonction des besoins, les modules (5, 6) de séparation d'air dans un agencement en parallèle. Avec plus de deux modules (5, 6) de séparation d'air il est aussi possible d'envisager alternativement, un agencement avec des modules (5, 6) de séparation d'air en série et en parallèle, et un agencement avec uniquement des modules (5, 6) de séparation d'air en série. De plus, et pour s'adapter au mieux aux besoins en quantité et en qualité de gaz d'inertage, les membranes de zéolithe du premier module (5) peuvent être de tailles différentes de celles du deuxième module (6).

Le générateur (1) de gaz d'inertage selon l'invention peut également être utilisé en sortie (15) d'un générateur (1) pour extraire l'azote restant dans ledit gaz enrichi en oxygène et améliorer le rendement dudit système.

De la même manière, étant donné qu'un générateur de gaz d'inertage (1) génère également un gaz enrichi en oxygène, l'invention peut être mise en œuvre pour générer un gaz enrichi en oxygène avec des modules de séparation d'air agencés sélectivement en série ou en parallèle.

## Revendications

1. Générateur (1) de gaz d'inertage à partir d'un flux d'air, notamment pour système d'inertage d'au moins un réservoir de carburant d'un aéronef, ledit générateur (1) comprenant un circuit d'air (2) comprenant une entrée d'air (3), une sortie de gaz d'inertage (4), et des premier et deuxième modules (5, 6) de séparation d'air agencés en série sur ledit circuit d'air (2) pour appauvrir l'air en oxygène et générer du gaz d'inertage enrichi en azote, le circuit d'air (2) comprenant des moyens de déviation (7, 9) d'une partie du flux d'air en amont du premier module (5) directement vers le deuxième module (6), et des moyens de déviation (8, 10) de l'intégralité du flux d'air en aval du premier module (5) directement vers la sortie de gaz d'inertage (4), ***caractérisé* en ce qu'**il comprend une première vanne (7) et une deuxième vanne (8) agencées sur le circuit d'air (2) entre le premier module (5) et le deuxième module (6), la première vanne (7) est connectée à la sortie de gaz d'inertage (4) par un premier circuit de dérivation (9), et la deuxième vanne (8) est connectée au circuit d'air (2) en amont du premier module (5) par un deuxième circuit de dérivation (10).

2. Générateur (1) selon la revendication 1, ***caractérisé* en ce que** les vannes (7, 8) sont des vannes (7, 8) de régulation de débit.

3. Générateur (1) selon la revendication 1, ***caractérisé* en ce que** les vannes (7, 8) sont des vannes (7, 8) de régulation de pression.

4. Générateur (1) selon l'une des revendications 1 à 3, ***caractérisé* en ce que** les premier et deuxième modules (5, 6) de séparation d'air comprennent des membranes de zéolithe.

5. Générateur (1) selon la revendication 4, ***caractérisé* en ce que** les membranes de zéolithe du premier module (5) sont de tailles différentes des membranes de zéolithe du deuxième module (6).

6. Aéronef comprenant un système d'inertage (11) d'au moins un réservoir (12) de carburant de l'aéronef, ledit système comprenant au moins un générateur (1) de gaz d'inertage alimenté avec de l'air de purge détourné d'au moins un moteur de l'aéronef et/ou de l'air d'une cabine de passagers de l'aéronef, et des moyens de distribution (13) du gaz d'inertage dans le ou les réservoirs (12) de carburant, reliés au générateur (1) de gaz d'inertage, ***caractérisé* en ce que** le générateur (1) de gaz d'inertage est conforme à l'une des revendications 1 à 5.

## Patentansprüche

1. Schutzgas-Generator (1) aus einem Luftstrom, insbesondere für Inertisierungssysteme mindestens eines Treibstofftanks eines Luftfahrzeugs, wobei dieser Generator (1) einen Luftkreislauf (2) mit einem Lufteinlass (3), einem Schutzgasauslass (4), und ersten und zweiten Modulen (5, 6) zur Luftabscheidung enthält, die in Reihe in diesem Luftkreislauf (2) angeordnet sind, um den Sauerstoffgehalt der Luft zu verringern und mit Stickstoff angereichertes inertes Schutzgas zu erzeugen, wobei der Luftkreislauf (2) für einen Teil des Luftstroms vor dem ersten Modul (5) über Umlenkvorrichtungen (7, 9) direkt zum zweiten Modul (6) und über Umlenkvorrichtungen (8, 10) für den gesamten Luftstrom hinter dem ersten Modul (5) direkt zum Schutzgasauslass (4) verfügt, ***dadurch gekennzeichnet, dass*** er ein erstes Ventil (7) und ein zweites Ventil (8) enthält, die im Luftkreislauf (2) zwischen dem erstes Modul (5) und dem zweiten Modul (6) angeordnet sind, das erste Ventil (7) mit dem Schutzgasauslass (4) über einen ersten Verzweigungskreis (9) verbunden ist und das zweite Ventil (8) mit dem Luftkreislauf (2) vor dem ersten Modul (5) über einen zweiten Verzweigungskreis (10) verbunden ist.

2. Generator (1) nach Anspruch 1, ***dadurch gekennzeichnet, dass*** es sich bei den Ventilen (7, 8) um Durchflussregelungsventile (7, 8) handelt.

3. Generator (1) nach Anspruch 1, ***dadurch gekennzeichnet, dass*** es sich bei den Ventilen (7, 8) um Druckregelungsventile (7, 8) handelt.

4. Generator (1) nach einem der Ansprüche 1 bis 3, ***dadurch gekennzeichnet, dass*** das erste und das zweite Luftabscheidemodul (5, 6) Zeolith-Membrane enthalten.

5. Generator (1) nach Anspruch 4, ***dadurch gekennzeichnet, dass*** die Zeolith-Membrane des ersten Moduls (5) eine andere Größe haben, als die Zeolith-Membrane des zweiten Moduls (6).

6. Luftfahrzeug mit einem Inertisierungssystem (11) für mindestens einen Treibstofftank (12) des Luftfahrzeugs, wobei dieses System mindestens einen Schutzgas-Generator (1), der mit Spülluft aus mindestens einem Motor des Luftfahrzeugs, und/oder mit Luft aus einer Passagierkabine des Luftfahrzeugs versorgt wird sowie Verteilervorrichtungen (13) für das Schutzgas in dem oder den Treibstofftanks (12) enthält, die mit dem Schutzgas-Generator (1) verbunden sind, ***dadurch gekennzeichnet, dass*** der Schutzgas-Generator (1) einem der Ansprüche 1 bis 5 entspricht.

## Claims

1. An inert gas generation system (1) from a flow of air, notably for an inerting system for at least one aircraft fuel tank, said generation comprising an air circuit (2) comprising an air inlet (3), an inert gas outlet (4), and a first and a second air separation module (5, 6) arranged in series on said air circuit (2) to deplete oxygen within the air and to generate a nitrogen-enriched inert gas, the air circuit (2) comprising routing means (7, 9) for a portion of the air flow upstream of the first module (5) directly to the second module (6), and routing means (8, 10) for the entire air flow downstream from the first module (5) directly to the inert gas outlet (4), ***characterized* in that** it comprises a first valve (7) and a second valve (8) arranged on the air circuit (2) between the first module (5) and the second module (6), the first valve (7) being connected to the inert gas outlet (4) by a first bypass circuit (9), and the second valve (8) being connected to the air circuit (2) upstream of the first module (5) by a second bypass circuit (10).

2. The generation system (1) according to claim 1, ***characterized* in that** the valves (7, 8) are flow control valves (7, 8).

3. The generation system (1) according to claim 1, ***characterized* in that** the valves (7, 8) are pressure control valves (7, 8).

4. The generation system (1) according to any of claims 1 to 3, ***characterized* in that** the first and second air separation module (5, 6) comprise zeolite membranes.

5. The generation system (1) according to claim 4, ***characterized* in that** the size of the zeolite membranes of the first module (5) is different from the size of the zeolite membranes of the second module (6).

6. An inerting system (11) for at least one aircraft fuel tank (12), said system comprising at least one inert gas generating system (1) supplied with bleed air diverted from at least one engine of the aircraft and/or air from a passenger cabin of the aircraft, and distribution means (13) for the inert gas to the fuel tank(s) (12) connected to the inert gas generation system (1), ***characterized* in that** the inert gas generation system (1) complies with any of claims 1 to 5.
